# FASCICULE DE BREVET EUROPEEN

(11) **EP 2 577 087 B1**
(45) Date de publication et mention de la délivrance du brevet: **19.03.2014**
(21) Numéro de dépôt: 11718055.4
(22) Date de dépôt: 03.05.2011
(51) Int. Cl.: F16D 65/097, F16D 65/00

(54) **PATIN DE FREIN A DISQUE AMELIORE ET FREIN A DISQUE COMPRENANT LEDIT PATIN**
VERBESSERTER KLOTZ FÜR SCHEIBENBREMSE UND SCHEIBENBREMSE MIT DIESEM KLOTZ
ENHANCED DISC-BRAKE SHOE AND DISC BRAKE INCLUDING SAID SHOE

(30) Priorité: 25.05.2010 FR 1002219
(43) Date de publication de la demande: 10.04.2013
(73) Titulaire: Robert Bosch GmbH, 70442 Stuttgart (DE)
(72) Inventeur: VINCK, Jan, F-49250 Beaufort En Vallee (FR); CORNIC, Matthieu, F-75009 Paris (FR); CHAMPION, Pascal, F-49240 Avrille (FR); CHEVALLET, Frédéric, F-75019 Paris (FR); PRADES, Xavier, F-49125 Tierce (FR)
(86) Numéro de dépôt international: PCT/EP2011/057038
(87) Numéro de publication internationale: WO 2011/147663

(56) Documents cités:
- EP-A1- 0 191 597
- US-B1- 6 170 620

## Description

### Domaine de l'invention

L'invention est relative à un patin de frein à disque.

### Etat de la technique

L'utilisation de freins à disque implantés sur des roues de véhicules motorisés est connue depuis de nombreuses années.

Ces freins à disque fonctionnent de la manière suivante :
- d'une part, un disque métallique est solidarisé en rotation avec la jante de la roue, ledit disque étant dans un plan perpendiculaire à une direction axiale correspondant à l'axe de rotation de la roue,
- d'autre part, sur une fraction de sa circonférence et à sa périphérie, le disque est inséré entre deux patins en regard solidaires d'un étrier fixe ou aptes à coulisser par une course dite axiale selon ladite direction axiale, et à exercer une pression sur le disque en rotation grâce à un maître cylindre, une pression sur la pédale de freins actionnant ledit maître cylindre par l'intermédiaire d'un liquide hydraulique.

Un patin de frein à disque comprend généralement :
- un support métallique sensiblement plan comprenant à chacune de ses deux extrémités un moyen de fixation à l'étrier,
- une plaquette d'usure assemblée à une face dite intérieure dudit support car en regard dudit disque, ladite plaquette étant destinée à être comprimée contre ledit disque en rotation afin de réduire sa vitesse de rotation par frottement et usure de la plaquette,
- une plaquette antibruit ou « shim » en matériau amortisseur assemblée à l'autre face dite extérieure dudit support par une couche de matière adhésive.

### Problèmes posés

En étudiant le comportement au freinage des freins à disque, la demanderesse a détecté, sur banc dynamométrique, un comportement anormal de la trainée résiduelle, à savoir une interaction résiduelle du patin sur le disque après interruption du freinage, notamment dans le cas d'un freinage sévère qui conduit notamment à une forte élévation de la température du patin, comme si une certaine action de freinage se poursuivait alors que le conducteur du véhicule aurait déjà cessé d'appuyer sur la pédale de frein.

Pour éliminer cette trainée résiduelle, il pourrait être envisagé d'augmenter l'écartement entre les patins, mais cela est exclu car, outre la nécessité d'un logement axial plus grand, cela augmenterait la course morte axiale du patin, ce qui augmenterait d'autant le délai entre le moment où le conducteur exerce une pression sur la pédale de frein et le moment où le patin exerce son action de freinage sur le disque.

Les problèmes associés à la présence d'une trainée résiduelle peuvent être de plusieurs ordres :
- d'une part, elle ne peut qu'entraîner une usure supplémentaire et inutile des dites plaquettes d'usure,
- d'autre part, elle ne peut que réduire la puissance du moteur disponible, et donc augmenter, en pure perte, la consommation de carburant.

Le document US 6170620 révèle un patin d'un frein à disque selon le préambule de la revendication 1.

### Objet de l'invention

L'invention a pour objet d'une part un patin qui résout les problèmes posés, et d'autre part un frein à disque comprenant au moins un patin selon l'invention.

### Description de l'invention

Selon l'invention, le patin d'un frein à disque, destiné à être assemblé à un étrier fixe est décrit dans la revendication 1.

Ce patin résout les problèmes posés. Pour cela, d'une part, la demanderesse a dû clairement identifier l'origine des problèmes, et elle a, d'autre part, trouvé une solution économique et efficace à ces problèmes.

En effet, à la suite d'observations et de mesures, elle a incriminé, à juste titre, la couche de matière adhésive lorsque cette dernière est soumise à une élévation de température significative. Elle a pu observer un gonflement de cette couche, qu'elle a attribué à la présence résiduelle ou à la formation d'une partie fluide au sein de cette couche, partie fluide, gazeuse ou éventuellement liquide, qui peut apparaître et donner naissance à un phénomène de dégazage lorsque la température de ladite couche s'élève pour atteindre des valeurs élevées lorsque le frein est fortement et fréquemment sollicité.

Sans préjuger de l'origine précise de ladite partie fluide, compte tenu de la relative complexité des matières adhésives en elles-mêmes et de leur stabilité thermique très variable d'un produit à l'autre, la demanderesse a donc d'abord vérifié cette hypothèse. Pour cela, elle a fait un essai dans lequel elle a dégazé pendant 14,5 heures à 60°C la colle devant servir à former ladite couche, et elle a observé une très nette diminution du gonflement de ladite couche, du moins à basse température.

Poursuivant son expérimentation, et afin de ne pas être obligée de passer par une aussi longue étape de dégazage préalable, la demanderesse a testé une autre solution plus économique en incorporant au patin un moyen d'évacuation de ladite partie fluide. Elle a pu observer un résultat supérieur à celui obtenu avec un dégazage de près de 15 heures à 60°C. Les essais ont également montré que la suppression ou l'atténuation du gonflement de ladite couche conduisait, par examen sur banc dynamométrique, à un comportement normal de la trainée résiduelle, c'est-à-dire à une trainée résiduelle résultant seulement des frottements inévitables quel que soit l'écartement entre patins.

### Description des figures

Les figures 1a et 3a à 3c et 4b sont relatives à l'invention et à ses effets techniques.
   La figure 1a représente, en ordonnée, le gonflement ou augmentation d'épaisseur de ladite couche de matière adhésive en µm, en fonction de la température du support en °C en abscisse.
   La courbe I correspond à un patin selon l'état de la technique, et la courbe II correspond à un patin dans lequel ladite couche de matière adhésive a été formée à partir d'une colle dégazée pendant 14,5 heures à 60°C.
   La figure 1b représente une coupe d'un frein à disque (8) selon ladite direction axiale (10) selon l'état de la technique.
La figure 2a est une vue en perspective d'un patin (1) permettant de voir la présence de huit canaux axiaux (70) formant des évents axiaux (7a). On a représenté en traits pointillés la variante dans laquelle un seul évent central (7a') a été formé dans la plaquette antibruit (6).
   La figure 2b est une coupe dudit patin (1) selon un plan A-A de la figure 2a contenant ladite direction axiale (10).
Les figures 3a à 3c, sont relatives à l'invention et sont des vues en perspective du support (4) permettant de voir sa face extérieure (42) sur laquelle sont formées, comme évant transversal (7b), une pluralité de dites premières rainures (71).

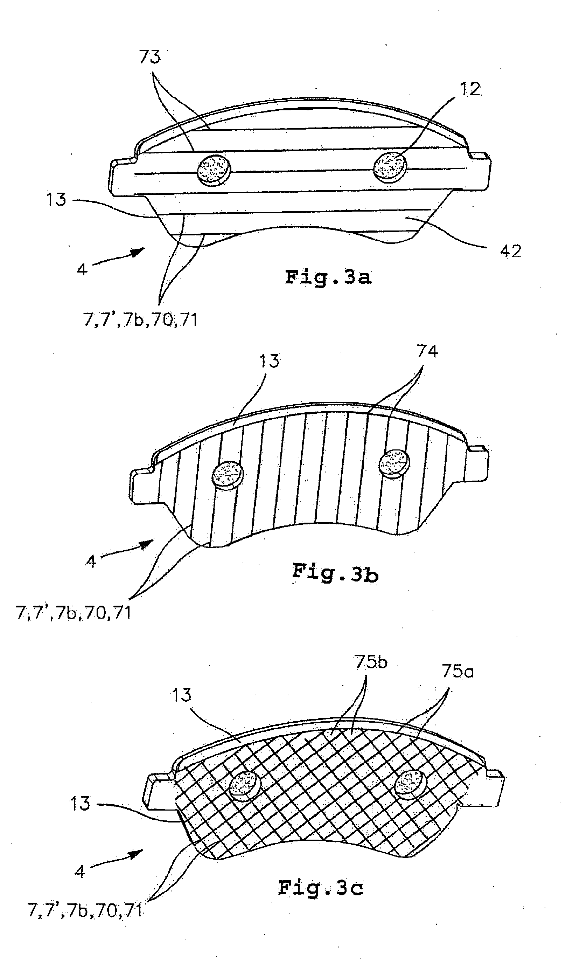

   Sur la figure 3a, lesdites premières rainures (71) forment une pluralité de canaux dits horizontaux (73).
   Sur la figure 3b, lesdites premières rainures (71) forment une pluralité de canaux dits verticaux (74).
   Sur la figure 3c, lesdites premières rainures forment une pluralité de canaux dits croisés (75a, 75b).

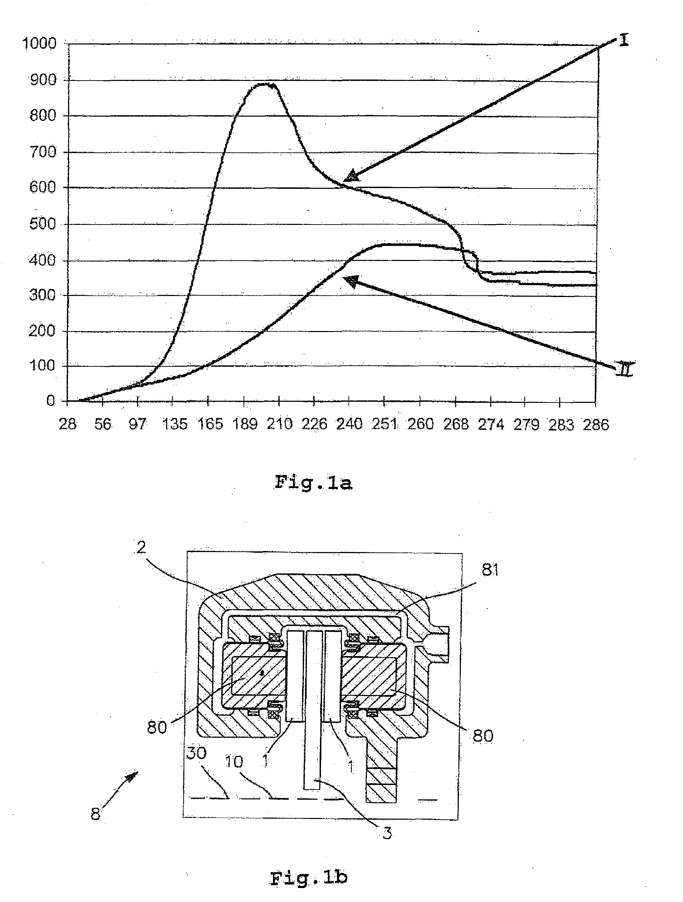

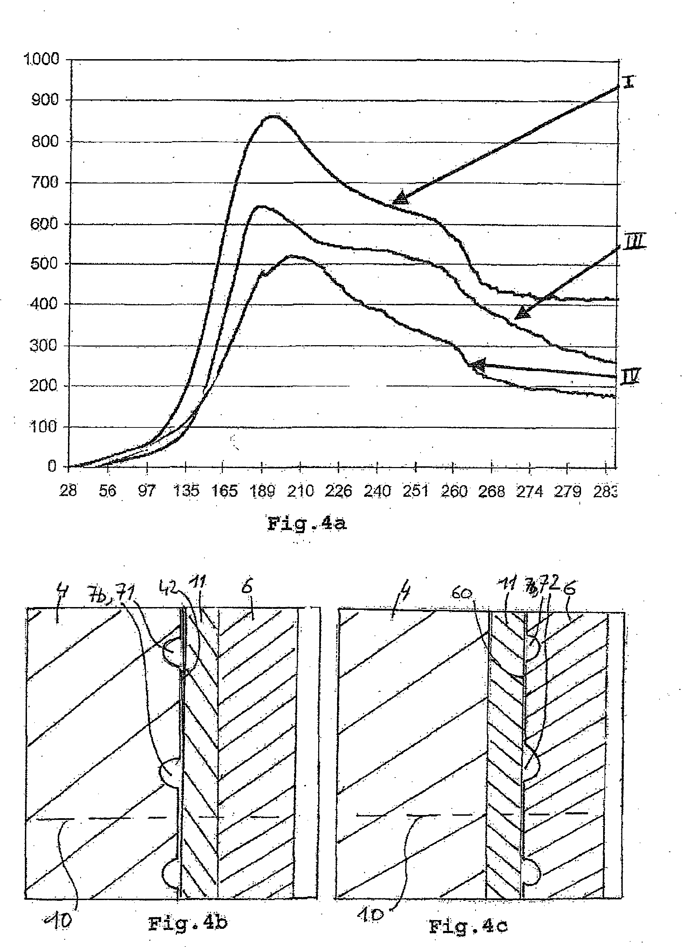

Sur la figure 4a, analogue à la figure 1a, la courbe I correspond à la courbe I de la figure 1a Les courbes III et IV sont relatives à des patins selon autres variantes.

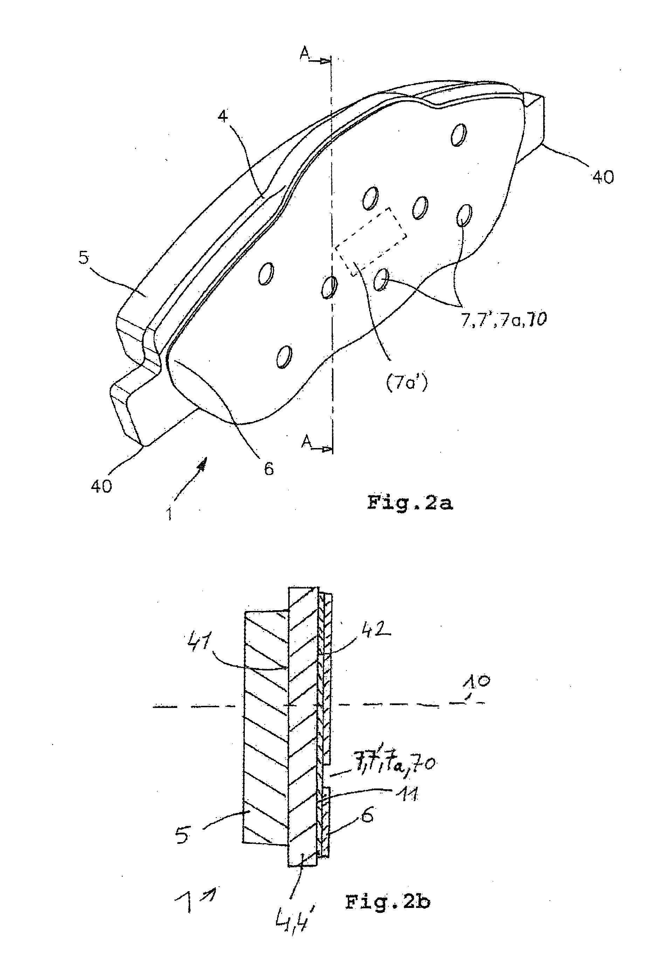

   Les figures 4b et 4c sont des coupes partielles comme représenté sur la figure 2b par le cadre noté B. La figure 4b représente l'invention et elle illustre la modalité d'évent transversal (7b) de la figure 3a, avec une pluralité de dites premières rainures (71) formée sur la surface extérieure (42) dudit support (4, 4').
   La figure 4c illustre une autre modalité d'évent transversal (7b), avec une pluralité de dites secondes rainures (72) formée sur la surface intérieure (60) de la plaquette antibruit (6).

### DESCRIPTION DTAILLEE DE L'INVENTION

Selon l'invention, ledit moyen d'évacuation (7) peut former ou comprendre au moins un évent (7') formant un canal de dégazage. Ainsi, un canal de dégazage débouchant à l'extérieur du patin permet un écoulement permanent de tout produit fluide qui pourrait se former ou apparaître lorsque la température du patin, et donc celle de la couche de matière adhésive, augmente lors d'un freinage, afin de réduire le risque d'une augmentation de la pression au sein de ladite couche, et donc son gonflement dans la direction axiale (10), comme on peut le voir sur la figure 4a.

Selon une première modalité, et comme illustré sur les figures 2a et 2b, ledit évent (7') peut former ou comprendre un évent axial (7a), orienté selon ladite direction axiale (10) et perpendiculairement à ladite plaquette antibruit (6), ledit canal de dégazage étant un canal axial (70) traversant de part en part, selon ladite direction axiale (10), ladite plaquette antibruit (6).

De préférence, ledit moyen d'évacuation (7) peut comprendre une pluralité de N canaux axiaux (70), éventuellement tous identiques, avec N allant de 2 à 20, et de préférence de 6 à 10. Le patin (1) donné en exemple sur la figure 2a comprend une pluralité de 8 canaux axiaux (70) répartis sensiblement de manière régulière sur toute la surface de la plaquette antibruit (6).

Lesdits canaux axiaux (70) peuvent présenter, dans un plan transversal perpendiculaire à ladite direction axiale (10), une section circulaire avec un diamètre D allant de 1 à 10 mm, et de préférence de 2 à 5 mm.

Selon l'invention, et comme illustré sur les figures 3a à 3c et 4b, ledit évent (7') forme ou comprend au moins un évent transversal (7b) débouchant sur la tranche (13) dudit patin (1).

Selon l'invention illustrée sur les figures 3a à 3c et 4b, ledit évent transversal (7b) peut comprendre au moins une dite première rainure (71) formée dans ledit support (4, 4') sur sa face extérieure (42).

Selon une seconde variante n'étant pas compris à l'invention, illustrée sur la figure 4c, ledit évent transversal (7b) peut comprendre au moins une dite seconde rainure (72) formée dans ladite plaquette antibruit (6) sur une surface dite intérieure (60) de ladite plaquette antibruit (6).

Quelle que soit la variante, ledit évent (7') peut comprendre une pluralité de N' évents transversaux (7b), avec N' allant de 2 à 50.

Comme illustré sur la figure 3a, ladite pluralité de N' évents transversaux (7b) peut former une pluralité de N_{H} canaux dits horizontaux (73), avec N_{H} allant de 2 à 10. Sur l'exemple de support (4) représenté à la figure 3a, N_{H} vaut 6.

Comme illustré sur la figure 3b, ladite pluralité de N' évents transversaux (7b) peut former une pluralité de Nᵥ canaux dits verticaux (74), avec N_{V} allant de 8 à 20. Sur l'exemple de support (4) représenté à la figure 3b, N_{V} vaut 14.

Comme illustré sur la figure 3c, ladite pluralité de N'évents transversaux (7b) peut former une pluralité de N_{C} canaux croisés (75a, 75b), avec N_{C} allant de 20 à 50. Sur l'exemple de support (4) représenté à la figure 3c, N_{C} vaut 32, car il y a 16 canaux (75a) orientés vers la droite et 16 canaux (75b) orientés vers la gauche et qui croisent les précédents.

Un autre objet de l'invention est constitué par un frein à disque (8) d'un véhicule comprenant:
- un disque de frein (3), typiquement un disque métallique, solidarisé en rotation avec la jante d'une roue d'un véhicule, ledit disque (3) étant dans un plan perpendiculaire à ladite direction axiale (10),
- un étrier (2) fixe et apte à faire coulisser deux patins (1) en regard selon une course dite axiale selon ladite direction axiale (10), afin que les deux patins (1) en se rapprochant, par exemple grâce à deux pistons (80), exercent une pression sur le disque (3) en rotation, une pression sur la pédale de freins dudit véhicule actionnant lesdits pistons par l'intermédiaire d'un liquide hydraulique comprimé à l'aide d'un maître cylindre, ledit disque (3) étant inséré entre les deux patins (1) solidaires dudit étrier, frein dans lequel au moins un des deux patins (1), et de préférence les deux patins (1), est/sont un(des) patin(s)(1) selon l'invention.

### EXEMPLES DE REALISATION

Comme illustré sur différentes figures, plusieurs types d'évents (7') ont été incorporés à des patins de l'état de la technique. Ainsi, tous les essais ont été réalisés toutes choses restant égales par ailleurs - hormis le moyen d'évacuation (7).
A) Selon une première modalité, on a formé des évents axiaux (7a) dans la plaquette antibruit (6), ces évents axiaux formant des canaux axiaux (70) débouchant à la surface de ladite plaquette antibruit (6) et la traversant sur toute son épaisseur.
A1) Selon une première variante de cette première modalité, on a formé un seul évent central (7a') dans la plaquette antibruit (6), comme représenté en traits pointillés sur la figure 2a.
A2) Selon une seconde variante de cette première modalité, illustrée sur les figures 2a et 2b, on a formé 8 évents axiaux (7a) dans la plaquette antibruit (6).
B) Selon une seconde modalité de l'invention, on a formé des évents transversaux (7b) dans un plan perpendiculaire à ladite direction axiale (10) ; ces évents (7b) forment des rainures qui débouchent donc sur le bord extérieur ou la tranche (13) du patin. Ces rainures présentent une section d'aire allant, par exemple, de 1 mm² à 3 mm².
B1) Selon l'invention, on a formé ces évents (7b) sur la face extérieure (42) dudit support (4) de manière à former une pluralité de dites premières rainures (71) qui peuvent être orientées de diverses manières, comme illustré sur les figures 3a, 3b, 3c et 4b.
B2) Selon une seconde variante n'étant pas compris à l'invention, on a formé ces évents (7b) sur la surface intérieure de la plaquette antibruit (6), comme illustré sur la figure 4c.

### Résultats obtenus

On a mesuré le gonflement axial de la couche de matière adhésive (1), comme illustré sur la figure 4a.

La courbe III de la figure 4a correspond au cas où ledit évent (7) est formé par un évent axial (7a) formant un seul canal axial (70) placé sensiblement au centre géométrique de ladite plaquette antibruit (6), et de section rectangulaire d'environ 3 mm x 6 mm, comme représenté en pointillés au centre de la figure 2a (essai III).

La courbe IV correspond au cas où ledit évent (7) est formé par une pluralité de 8 évents axiaux (7a) comme illustré sur la figure 2a (essai IV).

**Liste des repères :**

| | | | |
|---|---|---|---|
| Patin | | | 1 |
| | Direction axiale | | 10 |
| | Couche de matière adhésive | | 11 |
| | Moyen de fixation de 5 à 4 | | 12 |
| | Bord ou tranche | | 13 |
| Etrier | | | 2 |
| Disque de frein | | | 3 |
| | Axe de rotation | | 30 |
| Support métallique de 1 | | | 4, 4' |
| | Moyen d'assemblage à 2 | | 40 |
| | Face intérieure | | 41 |
| | Face extérieure | | 42 |
| Plaquette d'usure de 1 | | | 5 |
| Plaquette antibruit | | | 6 |
| | Surface intérieure | | 60 |
| Moyen d'évacuation | | | 7 |
| Event | | | 7' |
| Event axial | | | 7a, 7a' |
| Event transversal | | | 7b |
| Canal axial | | | 70 |
| Première rainure | | | 71 |
| Seconde rainure | | | 72 |
| Canal horizontal | | | 73 |
| Canal vertical | | | 74 |
| Canal croisé | | | 75a, 75b |
| Frein à disque | | | 8 |
| | | Piston | 80 |
| | | Circuit hydraulique | 81 |

## Revendications

1. Patin (1) d'un frein à disque (8), destiné à être assemblé à un étrier (2) fixe pour exercer, lors d'un freinage, une pression sur un disque de frein (3) d'une roue présentant un axe de rotation (30), suite à une course axiale dudit patin selon une direction dite axiale (10) parallèle à celle dudit axe de rotation (30), et comprenant :
- un support (4), par exemple un support métallique (4'), sensiblement plan comprenant deux extrémités (40) formant un moyen d'assemblage audit étrier (2) et présentant deux faces, une face dite intérieure (41) en regard dudit disque de frein (3), et une face opposée dite extérieure (42),
- une plaquette d'usure (5) assemblée audit support (4) contre sa face intérieure (41) grâce à un moyen de fixation (12), et destinée à être comprimée contre ledit disque (3) lors dudit freinage, afin de réduire sa vitesse de rotation par frottement et usure de ladite plaquette (5),
- une plaquette antibruit ou « shim » en matériau amortisseur (6) assemblée à ladite face extérieure (42) dudit support par une couche de matière adhésive (11),
**caractérisé en ce qu'**il comprend un moyen d'évacuation (7) formé au moins d'un évent transversal (7b) débouchant sur la tranche (13) dudit patin (1) formant un canal de dégazage d'une partie fluide de ladite couche de matière adhésive (11), afin que ladite partie fluide puisse, au moins en partie, s'écouler hors de ladite couche de matière adhésive (11) notamment quand ledit patin (1) est porté à une température d'au moins égale à 150°C lors dudit freinage et que ledit évent transversal (7b) comprend une dite première rainure (71) formée dans ledit support (4, 4') sur sa face extérieure (42).

2. Patin selon une quelconque la revendication 1 dans ledit évent transversal (7b) comprend une dite seconde rainure (72) formée dans ladite plaquette antibruit (6) sur une surface dite intérieure (60) de ladite plaquette antibruit (6).

3. Patin selon une quelconque des revendications 1 et 2 dans lequel ledit évent (7') comprend une pluralité de N' évents transversaux (7b), avec N' allant de 2 à 50.

4. Frein à disque (8) d'un véhicule comprenant:
- un disque de frein (3), typiquement un disque métallique, solidarisé en rotation avec la jante d'une roue d'un véhicule, ledit disque (3) étant dans un plan perpendiculaire à ladite direction axiale (10),
- un étrier (2) fixe et apte à faire coulisser deux patins (1) en regard selon une course dite axiale selon ladite direction axiale (10), afin que les deux patins (1) en se rapprochant, par exemple grâce à deux pistons (80), exercent une pression sur le disque (3) en rotation, une pression sur la pédale de freins dudit véhicule actionnant lesdits pistons par l'intermédiaire d'un liquide hydraulique comprimé à l'aide d'un maître cylindre, ledit disque (3) étant inséré entre les deux patins (1) solidaires dudit étrier, dans lequel au moins un des deux patins (1), et de préférence les deux patins (1), est/sont un(des) patin(s)(1) selon une quelconque des revendications 1 à 3.
La courbe III correspond à l'essai III, à savoir la première variante de la première modalité (voir paragraphe A1) qui comprend un seul évent axial central (7a') tandis que la courbe IV correspond à l'essai IV, à savoir la seconde variante de la première modalité (voir paragraphe A2).
Les variantes d'essais selon ladite seconde modalité (voir paragraphes B, B1 et B2) ont conduit à des courbes voisines de la courbe IV.
Si, sur la figure 4a, on compare ces courbes à la courbe I témoin qui correspond au patin de l'état de la technique (essai témoin), on observe une réduction du gonflement, et cela à toute température, et même une forte réduction du gonflement dans le cas du patin relatif à la courbe IV. Si, sur la figure 1a, on compare la courbe I et la courbe II relative à l'essai II obtenu par un long dégazage de la matière adhésive, on peut noter l'efficacité du traitement de dégazage pour les températures inférieures à 220°C, mais sa totale inefficacité pour des températures supérieures à 270°C.
C'est notamment une des raisons pour laquelle cet essai n'a pas été retenu comme étant une solution aux problèmes posés, les tests réalisés au banc dynamométrique pour les différents essais de patins ayant permis de vérifier la corrélation entre les mesures de gonflement en fonction de la température et le niveau de trainée résiduelle.
En conclusion : des modifications peu onéreuses réalisées sur une des pièces du patin ont permis de résoudre les problèmes posés, et cela sans avoir à remettre en cause de manière significative le procédé fabrication du patin, tant en ce qui concerne l'outil de production, la productivité de cet outil et les coûts de production associés.

## Patentansprüche

1. Klotz (1) für eine Scheibenbremse (8), der an einem festen Sattel (2) angebracht werden soll, um bei einem Bremsvorgang nach einem Axialhub des Klotzes in einer sogenannten Axialrichtung (10) parallel zu der einer Drehachse (30) einen Druck auf eine Bremsscheibe (3) eines Rads auszuüben, das die Drehachse (30) aufweist, und der Folgendes umfasst:
- einen im Wesentlichen ebenen Träger (4), zum Beispiel einen metallischen Träger (4'), der zwei Enden (40), die ein Mittel zum Anbringen am Sattel (2) bilden, umfasst und zwei Flächen, eine sogenannte Innenfläche (41) gegenüber der Bremsscheibe (3) und einen gegenüberliegende sogenannte Außenfläche (42) aufweist,
- einen Verschleißbelag (5), der auf dem Träger (4) gegen seine Innenfläche (41) mittels eines Befestigungsmittels (12) angebracht ist und bei dem Bremsvorgang gegen die Scheibe (3) zusammengedrückt werden soll, um durch Reibung und Abrieb des Belags (5) ihre Drehzahl zu reduzieren,
- einen Dämpfbelag oder eine Zwischenscheibe aus einem Dämpfungsmaterial (6), der bzw. die an der Außenfläche (42) des Trägers durch eine Klebstoffschicht (11) angebracht ist,
**dadurch gekennzeichnet, dass** er ein Entlüftungsmittel (7) umfasst, das aus mindestens einer quer verlaufenden Lüftungsöffnung (7b) gebildet ist, die in die Schmalseite (13) des Klotzes (1) führt und einen Kanal zum Entgasen eines flüssigen Teils der Klebstoffschicht (11) bildet, so dass der flüssige Teil zumindest teilweise aus der Klebstoffschicht (11) entweichen kann, vor allem, wenn der Klotz (1) bei dem Bremsvorgang auf eine Temperatur von mindestens 150°C gebracht wird, und dass die quer verlaufende Lüftungsöffnung (7b) eine sogenannte erste Nut (71) umfasst, die in dem Träger (4, 4') auf seiner Außenseite (42) ausgebildet ist.

2. Klotz nach Anspruch 1, wobei die quer verlaufende Lüftungsöffnung (7b) eine sogenannte zweite Nut (72) umfasst, die in dem Dämpfbelag (6) auf einer sogenannten Innenfläche (60) des Dämpfbelags (6) ausgebildet ist.

3. Klotz nach einem der Ansprüche 1 und 2, wobei die Lüftungsöffnung (7') eine Mehrzahl von N' quer verlaufenden Lüftungsöffnungen (7b) umfasst, wobei N' von 2 bis 50 beträgt.

4. Scheibenbremse (8) für ein Fahrzeug, die Folgendes umfasst:
- eine Bremsscheibe (3), in der Regel eine metallische Scheibe, die mit der Nabe eines Rads eines Fahrzeugs drehfest verbunden ist, wobei sich die Scheibe (3) in einer senkrecht zur Axialrichtung (10) verlaufenden Ebene befindet,
- einen festen Sattel (2), der zwei gegenüberliegende Klötze (1) in Gleitbewegung entlang einem sogenannten Axialweg in der Axialrichtung (10) versetzen kann, so dass die beiden Klötze (1), während sie sich annähern, beispielsweise mittels zweier Kolben (80), einen Druck auf die sich drehende Scheibe (3) ausüben, wobei ein Drücken des Bremspedals des Fahrzeugs die Kolben mit Hilfe einer durch einen Hauptzylinder komprimierten Hydraulikflüssigkeit betätigt, wobei die Scheibe (3) zwischen den fest mit dem Sattel verbundenen beiden Klötzen (1) eingesetzt ist, wobei mindestens einer der beiden Klötze (1), und vorzugsweise beide Klötze (1), ein Klotz oder Klötze (1) nach einem der Ansprüche 1 bis 3 ist bzw. sind.

## Claims

1. Pad (1) of a disc brake (8), intended to be assembled to a fixed caliper (2) in order to exert, during a braking operation, a pressure on a brake disc (3) of a wheel having an axis of rotation (30), subsequent to an axial travel of the said pad in a so-called axial direction (10) parallel to that of the said axis of rotation (30), and comprising:
- a substantially planar carrier (4), for example a metal carrier (4'), comprising two ends (40) forming a means for assembly to the said caliper (2) and having two surfaces, i.e. a so-called inner surface (41) facing the said brake disc (3), and a so-called outer opposite surface (42),
- a wear plate (5) assembled to the said carrier (4) against its inner surface (41) by virtue of a fastening means (12), and intended to be compressed against the said disc (3) during the said braking operation, in order to reduce its speed of rotation by friction and wear of the said plate (5),
- an anti-noise plate (6) or "shim" made of damping material assembled to the said outer surface (42) of the said carrier by a layer (11) of adhesive material,
**characterized in that** it comprises a discharge means (7) formed at least by one transverse vent (7b) opening onto the edge (13) of the said pad (1) forming a duct for degassing a fluid portion of the said layer (11) of adhesive material, in order that the said fluid portion is able, at least in part, to flow outside the said layer (11) of adhesive material in particular when the said pad (1) is heated to a temperature of at least equal to 150°C during the said braking operation and when the said transverse vent (7b) comprises a so-called first groove (71) formed in the said carrier (4, 4') on its outer surface (42).

2. Pad according to Claim 1, in which the said transverse vent (7b) comprises a so-called second groove (72) formed in the said anti-noise plate (6) on a so-called inner surface (60) of the said anti-noise plate (6).

3. Pad according to either one of Claims 1 and 2, in which the said vent (7') comprises a plurality of N' transverse vents (7b), with N' ranging from 2 to 50.

4. Disc brake (8) of a vehicle comprising:
- a brake disc (3), typically a metal disc, secured in rotation with the rim of a wheel of a vehicle, the said disc (3) being in a plane perpendicular to the said axial direction (10),
- a fixed caliper (2) able to allow two facing pads (1) to slide along a so-called axial path in the said axial direction (10), in order that the two pads (1), as they approach one another, for example by means of two pistons (80), exert a pressure on the rotating disc (3), a pressure on the brake pedal of the said vehicle actuating the said pistons by means of a hydraulic liquid compressed with the aid of a master cylinder, the said disc (3) being inserted between the two pads (1) secured to the said caliper, in which at least one of the two pads (1), and preferably the two pads (1), is or are a pad (1) or pads according to any one of Claims 1 to 3.
